(19) Europäisches Patentamt
European Patent Office
Office européen des brevets

(11) **EP 1 684 394 B1**

(12) **FASCICULE DE BREVET EUROPEEN**

(45) Date de publication et mention
de la délivrance du brevet:
**06.05.2009 Bulletin 2009/19**

(51) Int Cl.:
***H02H 9/08*** *(2006.01)*

(21) Numéro de dépôt: **05290581.7**

(22) Date de dépôt: **16.03.2005**

(54) **Poste de transformation électrique moyenne tension/basse tension**

Mittelspannung/Niederspannung - Transformatorenstation

Medium/low voltage transformer station

(84) Etats contractants désignés:
**AT BE BG CH CY CZ DE DK EE ES FI FR GB GR
HU IE IS IT LI LT LU MC NL PL PT RO SE SI SK TR**

(30) Priorité: **19.01.2005 FR 0550158**

(43) Date de publication de la demande:
**26.07.2006 Bulletin 2006/30**

(73) Titulaire: **SOCIETE NOUVELLE TRANSFIX
TOULON
46000 Cahors (FR)**

(72) Inventeurs:
• **Faltermeier, Jean-Francis
83210 Sollies-Toucas (FR)**
• **Trifigny, Philippe
83210 La Farlede (FR)**

(74) Mandataire: **Breese, Pierre
NOVAGRAAF IP
3, avenue de l'Opéra
75001 Paris (FR)**

(56) Documents cités:
**DE-C- 904 433          DE-C1- 10 146 294**

## Description

La présente invention concerne un poste de transformation électrique moyenne tension / basse tension (MT/BT).

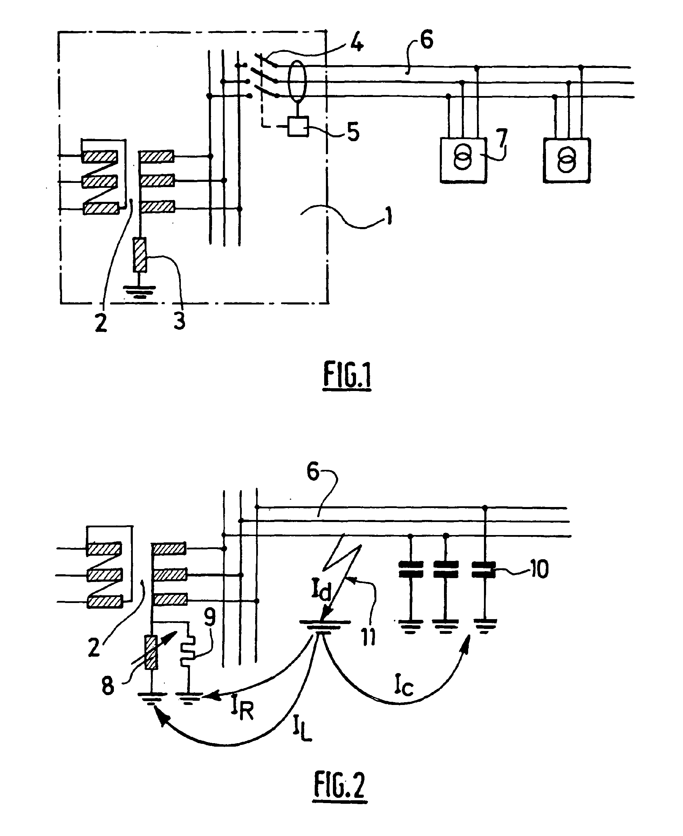

Comme le montre la figure 1, un réseau de distribution électrique moyenne tension triphasé tel qu'on en trouve dans la plupart des pays d'Europe, est généralement constitué des éléments suivants :

- un poste source 1 qui alimente le réseau, dans lequel se trouvent un transformateur haute tension / moyenne tension 2, une impédance de point neutre 3, et différents départs de ligne 4 , équipés de moyens de protection contre les courts-circuits, dont des protections homopolaires 5 qui interviennent plus particulièrement en cas de défaut entre une phase de la ligne 6 et la terre,

- différentes lignes MT 6, pouvant être soit de type aérien en conducteur nu, soit de type souterrain ou aérien en conducteur isolé avec écran de terre,

- des postes de transformation moyenne tension / basse tension 7, destinés à fournir les besoins en électricité des clients desservis par le réseau.

Par le passé, les lignes MT 6 étaient essentiellement aériennes et constituées de conducteurs nus. De telles lignes sont exposées aux contraintes climatiques (tempêtes, orages, ...). Pour rendre les réseaux moins vulnérables et donc améliorer la qualité de service, les distributeurs d'électricité ont remplacé partiellement, voire intégralement, ces lignes aériennes par des lignes souterraines constituées de câble MT avec écran périphérique mis à la terre. Par contre, si la fiabilité des réseaux s'en est trouvée fortement améliorée, il est apparu que l'effet capacitif de ces câbles pouvait être néfaste à la protection des personnes et des biens, du fait d'une forte augmentation du courant de défaut en cas de court-circuit entre une phase du réseau et la terre. Pour pallier cet inconvénient, les distributeurs d'électricité ont inséré une inductance entre le neutre du réseau MT et la terre, de manière à compenser le courant capacitif apparaissant lors des défauts entre phase et terre.

Comme le montre la figure 2, cette inductance 8 est située dans le poste source haute tension / moyenne tension, typiquement connectée au point neutre de l'enroulement secondaire du transformateur haute tension / moyenne tension 2. En parallèle de cette inductance 8 et également connectée une résistance 9 destinée à permettre la détection des défauts entre phase et terre. Sur cette même figure, l'effet capacitif des câbles vis à vis de la terre est symbolisé par les condensateurs 10 de valeur C. En cas d'un défaut 11 entre une phase et la terre, un courant capacitif Ic va circuler dans le défaut. Ce courant peut atteindre des valeurs de l'ordre de la centaine d'ampères et engendrer des tensions de toucher ou des tensions de pas dangereuses selon la qualité des prises de terre au lieu du défaut. Dans la mesure où la valeur L de l'inductance de compensation 8 est telle que l'égalité suivante est respectée,

$$3LC\omega^2 = 1 \quad \text{où} \quad \omega = 2\pi f$$

f étant la fréquence du réseau, les courants IC et IL vont s'annuler et le courant de défaut phase terre Id ne comprend plus que le courant IR, d'une valeur généralement inférieure ou égale à 10 A, en fait essentiellement dépendant de la valeur de la résistance 9 et choisit de valeur juste suffisante pour permettre le fonctionnement des protections homopolaires du poste source. L'effet capacitif des câbles est ainsi supprimé et la valeur du courant de défaut Id est maîtrisée par l'exploitant.

De manière à respecter l'égalité précédente, quelque soit la configuration du réseau qui peut changer selon les contraintes d'exploitation ou suite à des extensions, l'inductance 8 est généralement réglable et accordée en permanence à la valeur effective du courant capacitif homopolaire du réseau grâce à un dispositif automatique.

Toutefois, de telles inductances, appelées également bobines de Petersen, sont des dispositifs particulièrement onéreux et dont la plage de réglage peut rapidement s'avérer insuffisante en cas d'extension du réseau. Il s'en suit que le distributeur d'énergie, voulant poursuivre une opération de fiabilisation de son réseau par enterrement progressif des lignes, ou voulant étendre son réseau pour assurer l'alimentation de nouveaux clients, est confronté à des contraintes économiques supplémentaires du fait de la nécessité d'intervenir au niveau du poste source et de remplacer la bobine de Petersen existante.

L'objet de la présente invention est d'éviter cet inconvénient et de permettre des extensions de réseau ou l'enterrement progressif des lignes du réseau sans devoir intervenir dans le poste source, ou tout au moins en minimisant les modifications à y apporter. Il concerne un poste de transformation moyenne tension / basse tension (ou encore MT/BT), dans lequel est intégré un moyen de compensation du courant homopolaire généré par la portion de réseau à laquelle est raccordé le poste.

Plus particulièrement, l'invention a pour objet un poste de transformation électrique MT/BT, comprenant un transformateur MT/BT, ledit poste comprenant un moyen de compensation du courant capacitif homopolaire généré par une portion de réseau MT de longueur forfaitaire auquel ledit transformateur est susceptible d'être connecté, en cas d'un défaut entre une phase et la terre situé sur ce réseau.

A titre d'exemple, un réseau souterrain de tension 10 kV réalisé avec des câbles avec écran de terre génère un courant capacitif de 1,5 A / km en cas d'un défaut franc entre une phase et la terre. Le poste de transformation objet de l'invention permet d'assurer de manière économique la compensation d'un courant pour des valeurs jusqu'à 15 A. Il couvre ainsi une portion de réseau de longueur égale à 10 km. La densité de l'habitat dans les pays occidentaux est telle que le nombre de postes de transformation tend à être supérieur ou égal à 1 poste MT/BT par km de réseau. En conséquence, grâce à l'objet de l'invention, il devient économique d'envisager des extensions souterraines de réseau MT, en insérant par exemple au sein de chaque groupe de 10 nouveaux postes MT/BT un poste MT/BT qui assure la compensation du courant capacitif homopolaire de la portion de réseau nécessaire à l'alimentation de ce groupe de postes. De cette manière, l'extension du réseau peut se faire en évitant d'apporter des modifications dans le poste source, ou, comme on le verra plus loin, en limitant ces modifications à un simple ajustement de la résistance de neutre.

Dans un mode de réalisation particulier, le transformateur MT/BT est un transformateur à bain d'huile.

Plus particulièrement, le moyen de compensation peut être intégré dans le bain d'huile du transformateur.

Egalement dans un mode de réalisation particulier, le moyen de compensation du courant homopolaire est une inductance.

Plus particulièrement, les caractéristiques de l'inductance peuvent être choisies pour, d'une part, assurer la compensation du courant homopolaire d'une portion de réseau MT sur laquelle est raccordé le poste et, d'autre part, ne pas perturber le fonctionnement des protections homopolaires situées dans le poste source qui alimente le réseau MT.

L'inductance peut être monophasée et connectée entre le point neutre constitué par les enroulements MT du transformateur et la mise à la terre du poste.

Plus particulièrement, l'inductance monophasée peut être constituée d'un solénoïde enveloppé d'un blindage magnétique.

Egalement dans un mode de réalisation particulier, le couplage des enroulements MT du transformateur est du type zigzag.

Un enroulement tertiaire de stabilisation de couplage triangle peut en outre être ajouté au transformateur.

Egalement dans un mode de réalisation particulier, le transformateur possède une cuve et comporte, sur une face latérale de ladite cuve une première armoire dans laquelle se trouvent les bornes de raccordement au réseau MT autorisant un schéma de branchement en passage d'ossature ou en antenne, et une seconde armoire comprenant un tableau de répartition BT permettant l'évacuation de l'énergie à partir de plusieurs câbles BT.

Le transformateur peut en outre intégrer un dispositif de protection associant trois fusibles MT à percuteur, un dispositif déconnecteur triphasé, et un dispositif de détection des courants de défaut entre phase et masse de la partie active du transformateur.

Plus particulièrement, la masse de la partie active de l'inductance peut être isolée de l'enveloppe du poste et reliée électriquement à la masse de la partie active du transformateur.

L'invention a également pour objet un réseau électrique à moyenne tension, comprenant au moins un poste de transformation tel que décrit ci-dessus, et au moins un poste de transformation ne comprenant pas de moyen de compensation du courant capacitif homopolaire

On décrira maintenant, à titre d'exemple non limitatif, un mode de réalisation particulier de l'invention, en référence aux dessins schématiques annexés dans lesquels :

- - la figure 1 est un schéma électrique d'un réseau de distribution électrique moyenne tension triphasé de l'art antérieur ;

- la figure 2 illustre les courants dans le réseau de la figure 1 ;

- la figure 3 est un schéma d'un tronçon de réseau MT incluant un poste de transformation selon l'invention ;

- la figure 4 illustre les courants dans le réseau de la figure 3 ;

- la figure 5 est un schéma d'un transformateur comprenant les moyens de l'invention ;

- les figures 6 et 7 sont respectivement un schéma et une vue en perspective d'un poste de transformation selon l'invention.

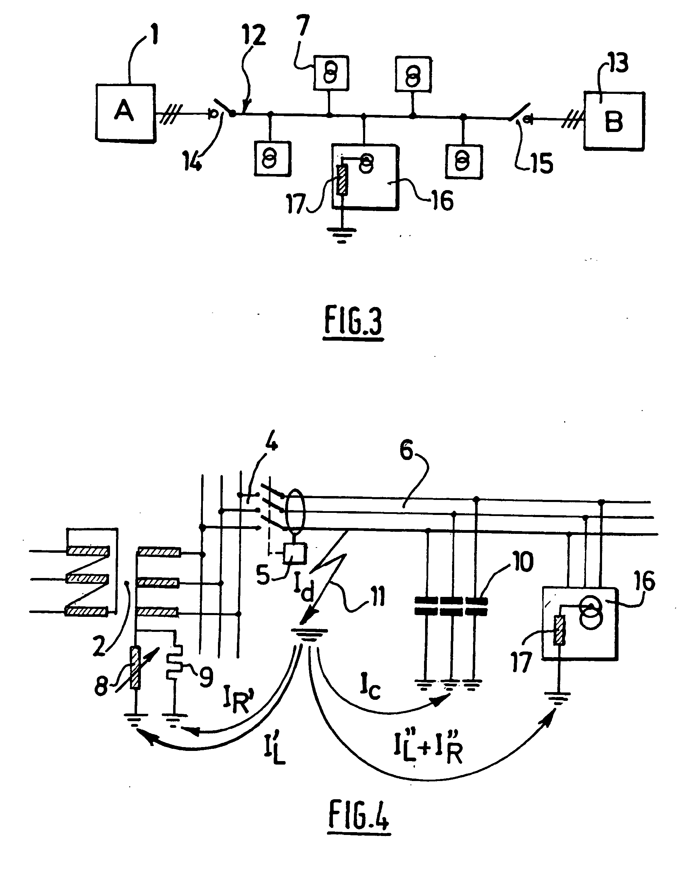

La figure 3 présente un tronçon de réseau MT 12, constituée partiellement ou intégralement d'un câble souterrain. Ce tronçon 12 est alimentée par un poste source A repéré 1 en conditions d'exploitation normale. Le courant capacitif homopolaire correspondant à ce tronçon de ligne est compensé par la bobine de Petersen située dans ce poste source A. Néanmoins, suite à une indisponibilité ou à une avarie de la ligne située entre le poste source 1 et le tronçon 12, il peut être nécessaire de changer de source d'alimentation. En ouvrant l'interrupteur 14 et en fermant l'interrupteur 15, le tronçon est réalimenté à partir du poste source B. Avec une solution antérieure à celle correspondant à la présente invention, il aurait été nécessaire de modifier l'accord des bobines de Petersen appartenant respectivement aux postes sources A et B, le courant capacitif homopolaire vu par le poste A ayant diminué, celui vu par le poste B ayant augmenté. Or, dans le cas de postes non équipés d'un système d'accord automatique, il est nécessaire de faire cette opération manuellement, ce qui peut s'avérer contraignant pour l'exploitant en cas de reconfiguration fréquente du réseau. Avec la solution correspondant à la présente invention, l'accord des bobines de Petersen n'a pas à être modifié, aucune intervention humaine n'est nécessaire.

Enfin, si la structure du réseau MT s'y prête, il est même possible de remplacer la bobine de Petersen par une inductance fixe nettement moins onéreuse qui assure une compensation forfaitaire de la partie permanente du réseau alimenté par le poste source. Seuls les tronçons susceptibles de changer de source d'alimentation sont alors équipés de postes MT/BT intégrant un dispositif de compensation spécifique. Il s'en suit pour l'exploitant une réduction d'investissement significative.

Le fait de multiplier les points de mise à la terre du neutre du réseau MT peut conduire à une perte de sensibilité de la protection homopolaire 5 qui équipe chaque départ de ligne 4 au niveau du poste source 1. Comme le montre la figure 4, une partie du courant dû au défaut et qui se refermait initialement au travers du poste source va à présent être déviée vers le dispositif de compensation 17 équipant un ou plusieurs postes de transformation MT/BT 16, et donc ne sera pas vue par la protection homopolaire 5.

Néanmoins, l'étude de cas d'application concrets montre que, quand cela s'avère nécessaire, il est facile de maintenir le niveau de sensibilité des protections en modifiant simplement la valeur de la résistance 9. Pour reprendre l'exemple précédent d'un réseau de distribution de tension 10 kV, comprenant une longueur totale de 100 km de câbles MT, impliquant que la bobine de Petersen soit réglée à une valeur sensiblement voisine de 150 A, une telle résistance est habituellement dimensionnée pour fournir un courant IR égal à 5 A en cas de défaut franc entre une phase du réseau et la terre. Dans les mêmes conditions, les dispositifs de compensation 17 intégrés dans les postes de transformation 16 fourniront chacun un courant inductif IL" de 15 A et un courant résistif IR" de l'ordre de 0,2 A, dû aux pertes ohmiques dans le dispositif. En imaginant une situation où le réseau concerné est étendu d'une longueur cumulée de 100 km de câbles, comportant environ 100 postes MT/BT dont 10 postes intégrant un dispositif de compensation 17, la sensibilité des protections sera maintenue à un niveau satisfaisant en divisant simplement par 2 la valeur de la résistance 9. Or il est facile d'effectuer une telle modification qui correspond à un investissement très limité.

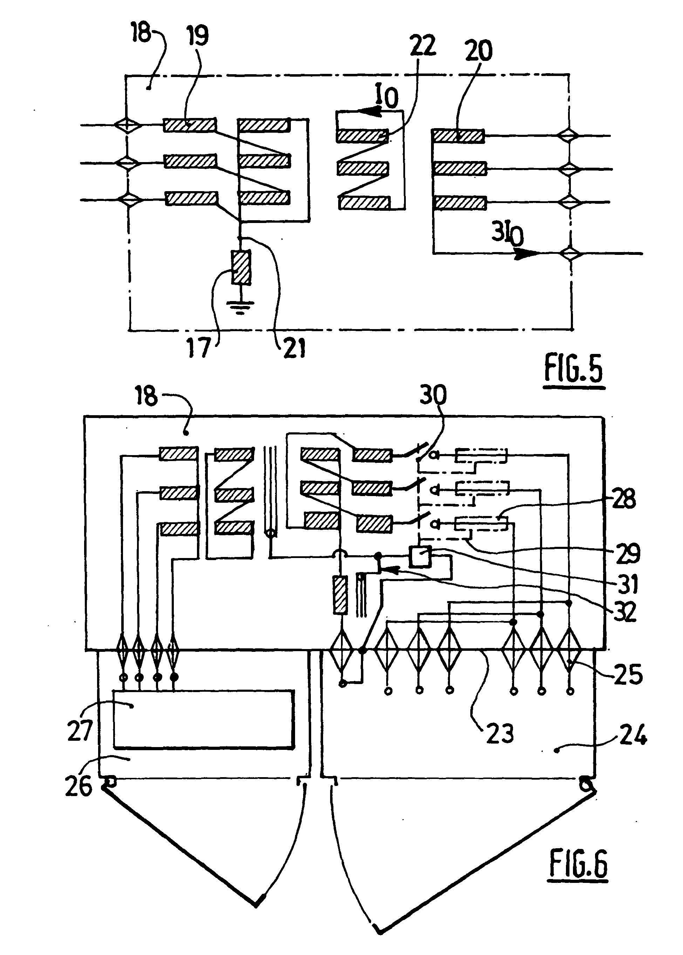

On décrira maintenant le mode de réalisation des postes de transformation MT/BT équipé d'un dispositif de compensation du courant capacitif homopolaire du réseau. Un poste de transformation comprend parmi ses composants un transformateur MT/BT, généralement à bain d'huile. La figure 5 présente le schéma électrique du transformateur équipant le poste objet de l'invention. Ce transformateur 18 comporte des enroulements primaires ou MT 19 et des enroulements secondaires ou BT 20. S'agissant d'un transformateur triphasé, les enroulements des trois phases peuvent être connectés en triangle, en étoile ou en zig-zag. Le couplage en zig-zag est plus particulièrement intéressant ici parce qu'il offre une impédance homopolaire très faible et donc peut être utilisé pour créer un point neutre. Selon un mode de réalisation préféré, le poste de transformation objet de l'invention comportera donc un transformateur triphasé dont les enroulements primaires 19 sont connectés selon un couplage de type zig-zag. On peut alors insérer entre le point neutre 21 ainsi obtenu dans le transformateur et la terre du poste une inductance monophasée 17 de caractéristiques choisies, qui compensera une certaine valeur de courant capacitif homopolaire du réseau en délivrant par exemple un courant réactif de 15 A sous pleine tension homopolaire.

Cette inductance peut être isolée dans l'huile minérale, ce qui présente l'avantage de permettre une réduction de son encombrement et également d'être insérée directement dans la cuve du transformateur. Selon un mode de réalisation préférentiel, elle est constituée d'un solénoïde réalisé à partir du bobinage d'un fil conducteur isolé.

Pour protéger l'environnement de l'inductance contre les effets du champ magnétique généré lorsque celle-ci est traversée par un courant, un blindage magnétique est disposé autour du solénoïde de façon à permettre aux lignes du champ de se refermer de manière contrôlée.

L'insertion d'une inductance entre le neutre du transformateur et la terre exige néanmoins certaines précautions, notamment quand le transformateur MT/BT du poste est susceptible d'alimenter une charge BT déséquilibrée, ce qui est généralement le cas en milieu rural. Ce déséquilibre est traduit sur la figure 5 par un courant circulant dans le neutre BT égal à 3 fois le courant homopolaire Io. En effet, ce courant homopolaire BT pourrait engendrer un courant homopolaire côté MT qui, traversant l'inductance de compensation 17, créerait une tension homopolaire indésirable. Pour éviter cet inconvénient, selon un autre mode de réalisation préférentiel, le transformateur 18 est muni d'enroulements tertiaires 22 dits enroulements de stabilisation qui sont connectés en triangle. De cette manière, le courant homopolaire BT Io sera compensé par un courant de circulation dans le triangle des enroulements de stabilisation 22 sans influencer les circuits MT.

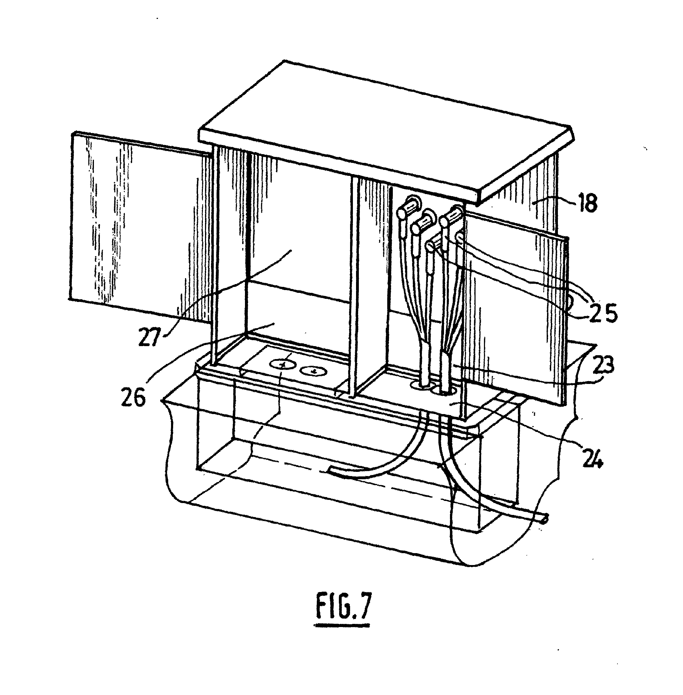

Un poste de transformation est généralement constitué d'une enveloppe, laquelle contient différents composants, dont les principaux sont un appareillage de raccordement et manoeuvre MT, un transformateur MT/BT, un tableau de répartition BT. Selon un mode de réalisation préférentiel, présenté sur les figures 6 et 7, le poste de transformation objet de l'invention ne comprend pas d'appareillage MT et est essentiellement constitué du transformateur, lequel comporte sur la plus grande face latérale de sa cuve 23 une première armoire 24 dans laquelle se trouvent les bornes de raccordement au réseau MT 25, et une seconde armoire 26 comprenant le tableau de répartition BT 27. On obtient ainsi un ensemble de grande compacité, de constitution totalement monolithique, d'un coût réduit par rapport à celui de postes conventionnels et permettant une mise en place très facile.

Le raccordement au réseau peut se faire selon un schéma en antenne, le transformateur comportant trois traversées MT 25. Mais il peut également se faire selon un schéma en passage ou encore appelé en coupure. Dans ce cas, le transformateur est équipé de six traversées MT 25 associées deux par deux.

Le raccordement direct du transformateur au réseau MT implique certaines dispositions contre les effets des défauts internes au transformateur. En effet, le réseau d'alimentation MT étant particulièrement intensif, un arc électrique apparaissant dans le bain d'huile du transformateur pourrait provoquer des effets thermiques et mécaniques se traduisant par des manifestations extérieures dangereuses pour le voisinage du poste. Il est donc prévu que le transformateur intègre un dispositif de protection et de coupure tel que décrit dans les brevets EP 0817346 et EP 1122848 déposés par la demanderesse. Ce dispositif associe des fusibles de protection MT 28 munis de percuteurs 29, un dispositif de déconnection MT triphasé 30, et un dispositif de détection d'un courant de défaut à la terre 31. Pour intégrer l'inductance de compensation dans le dispositif de protection, la masse de celle-ci, constituée du blindage magnétique qui l'enveloppe, est isolée de la masse générale du poste et est reliée grâce à une liaison galvanique 32 avec la masse de la partie active du transformateur au dispositif de détection d'un courant de défaut à la terre 31. Par ailleurs, la caractéristique électrique des fusibles 28 est choisie de manière à ce que ceux-ci soient insensibles au courant qui les traversera lors des différents défauts entre phase et terre qui apparaîtront sur le réseau.

Enfin, un tel poste de transformation, tel que présenté sur la figure 7, peut être indifféremment équipé ou non d'une inductance de compensation 17, selon les nécessités du projet d'évolution du réseau. Quelle que soit la version, la cuve 23, les armoires 24 et 26, les équipements 25 et 27, le dispositif de protection et déconnexion interne constitué des fusibles 28, des percuteurs 29, du déconnecteur 30 et du dispositif de détection des courants de défaut à la terre 31 restent communs. Le transformateur 18 comporte alors des enroulements primaires MT 19 couplés en triangle, des enroulements secondaires BT 20 en étoile, et ne comporte pas d'enroulements de stabilisation 22.

## Revendications

**1.** Poste de transformation électrique MT/BT, comprenant un transformateur MT/BT (18), **caractérisé par le fait qu'**il comprend connecté entre le point neutre des enroulements MT du transformateur et la terre du poste, un moyen (17) de compensation du courant capacitif homopolaire généré par une portion de réseau MT de longueur forfaitaire auquel ledit transformateur est susceptible d'être connecté, en cas d'un défaut entre une phase et la terre situé sur ce réseau.

**2.** Poste de transformation selon la revendication 1, dans lequel le transformateur MT/BT est un transformateur à bain d'huile.

**3.** Poste de transformation selon la revendication 2, dans lequel le moyen de compensation est intégré dans le bain d'huile du transformateur.

**4.** Poste de transformation selon l'une quelconque des revendications 1 à 3, dans lequel que le moyen de compensation du courant homopolaire est une inductance.

**5.** Poste de transformation selon revendication 4, dans lequel les caractéristiques de l'inductance sont choisies pour, d'une part, assurer la compensation du courant homopolaire d'une portion de réseau MT sur laquelle est raccordé le poste et, d'autre part, ne pas perturber le fonctionnement des protections homopolaires situées dans le poste source qui alimente le réseau MT

**6.** Poste de transformation selon l'une quelconque des revendication 4 et 5, dans lequel l'inductance est monophasée et connectée entre le point neutre constitué par les enroulements MT du transformateur et la mise à la terre du poste.

**7.** Poste de transformation selon revendication 6, dans lequel l'inductance monophasée est constituée d'un solénoïde enveloppé d'un blindage magnétique (masse de l'inductance monophasée).

**8.** Poste de transformation selon revendication 7, **caractérisé par le fait que** le couplage des enroulements MT du transformateur est du type zigzag.

**9.** Poste de transformation selon revendication 7 ou 8, comprenant un enroulement tertiaire (22) de stabilisation de couplage triangle ajouté au transformateur.

**10.** Poste de transformation selon l'une quelconque des revendications 1 à 9, dans lequel le transformateur possède une cuve (23) et comporte, sur une face latérale de ladite cuve une première armoire (24) dans laquelle se trouvent les bornes de raccordement (25) au réseau MT autorisant un schéma de branchement en passage d'ossature ou en antenne, et une seconde armoire (26) comprenant un tableau de répartition BT (27) permettant l'évacuation de l'énergie à partir de plusieurs câbles BT.

**11.** Poste de transformation selon revendication 10, dans lequel le transformateur intègre un dispositif de protection associant trois fusibles MT (28) à percuteur (29), un dispositif déconnecteur triphasé (30), et un dispositif (31) de détection des courants de défaut entre phase et masse de la partie active du transformateur.

**12.** Poste de transformation selon revendication 11, dans lequel la masse de l'inductance est isolée de la masse générale du poste et reliée électriquement à la masse de la partie active du transformateur.

**13.** Réseau électrique à moyenne tension, **caractérisé par le fait qu'**il comprend au moins un poste de transformation selon l'une quelconque des revendications 1 à 12 , et au moins un poste de transformation ne comprenant pas de moyen de compensation du courant capacitif homopolaire

**Claims**

**1.** MV/LV electrical transforming station comprising a MV/LV transformer (18), **characterised by** the fact that it comprises connected between the neutral point and the MV coils of the transformer and the earth of the station, means (17) of compensating the homopolar capacitive current generated by a portion of the MV network of a set length to which said transformer may be connected, in the event of a fault between a phase and the earth located on this network.

**2.** Transforming station of claim 1, in which the MV/LV transformer is an oil-immersed transformer.

**3.** Transforming station of claim 2, in which the compensation means are integrated into the oil bath of the transformer.

**4.** Transforming station of any of claims 1 to 3, in which the compensation means of the homopolar current is an inductance.

**5.** Transforming station of claim 4, in which the features of the inductance are selected so that they compensate the homopolar current of a portion of the MV network to which the station is connected, and so as not to disrupt the operation of the homopolar protections located on the source station which supplies the MV network.

**6.** Transforming station of any of claims 4 and 5, in which the inductance is single phased and is connected between the neutral point formed by the MV coils of the transformer and the earth connection of the station.

**7.** Transforming station of claim 6, in which the single phased inductance is formed by a solenoid surrounded by magnetic shielding (earth of the single phased inductance).

**8.** Transforming station of claim 7, **characterised by** the fact that the coupling of the MV coils of the transformer is of the zig zag type.

**9.** Transforming station of claim 7 or 8, comprising a triangle coupling stabilisation tertiary coil (22) added to the transformer.

**10.** Transforming station of any of claims 1 to 9, in which the transformer has a dish (23) and comprises, on one lateral face of said dish a first cabinet (24), in which are located the connector terminals (25) with the MV network authorising a structural or antenna passage connection layout, and a second cabinet (26) comprising a LV load centre (27) permitting energy to be evacuated through several LV cables.

**11.** Transforming station of claim 10, in which the transformer integrates a protective device associating three MV fuses (28) with a striker (29), a three phase isolating device (30) and a device (31) for detecting fault currents between the phase and earth of the active part of the transformer.

**12.** Transforming station of claim 11, in which the earth of the inductance is isolated from the general earth of the station and is connected electrically to the earth of the active part of the transformer.

**13.** Medium voltage electrical network, **characterised by** the fact that it comprises at least one transforming station of any of claims 1 to 12, ad at least one transforming station that does not comprise means of compensating the homopolar capacitive current.

**Patentansprüche**

**1.** Elektrische MS/NS-Transformatorenstation, umfassend einen MS/NS-Transformator (18), **dadurch gekennzeichnet, dass** sie zwischen dem Neutralpunkt der MS-Wicklungen des Transformators und der Erde der Station angeschlossen ein Mittel (17) zum Ausgleichen des gleichpoligen kapazitiven Stroms umfasst, der von einem MS-Netzabschnitt festgesetzter Länge erzeugt wird, an den der Transformator angeschlossen werden kann, falls ein Fehler zwischen einer Phase und der Erde in diesem Netz vorliegt.

**2.** Transformatorenstation nach Anspruch 1, wobei der MS/NS-Transformator ein Öltransformator ist.

**3.** Transformatorenstation nach Anspruch 2, wobei das Ausgleichsmittel in das Ölbad des Transformators integriert ist.

**4.** Transformatorenstation nach einem der Ansprüche 1 bis 3, wobei das Ausgleichsmittel des gleichpoligen Stroms eine Drosselspule ist.

**5.** Transformatorenstation nach Anspruch 4, wobei die Kennzeichen der Drosselspule gewählt werden, um einerseits den Ausgleich des gleichpoligen Stroms eines MS-Netzabschnitts, auf dem die Station angeschlossen ist, sicherzustellen, und um andererseits den Betrieb der gleichpoligen Schutzeinrichtungen, die sich in der Quellenstation befinden, die das MS-Netz speist, nicht zu stören.

**6.** Transformatorenstation nach einem der Ansprüche 4 und 5, wobei die Drosselspule einphasig ist und zwischen dem Neutralpunkt, der aus den MS-Wicklungen des Transformators besteht, und der Erdung der Station angeschlossen ist.

**7.** Transformatorenstation nach Anspruch 6, wobei die einphasige Drosselspule aus einem Solenoid besteht, der von einer magnetischen Abschirmung umhüllt ist (Masse der einphasigen Drosselspule).

**8.** Transformatorenstation nach Anspruch 7, **dadurch gekennzeichnet, dass** die Kopplung der MS-Wicklungen des Transformators zickzackartig ist.

**9.** Transformatorenstation nach Anspruch 7 oder 8, umfassend eine Tertiärwicklung (22) zum Stabilisieren der Deltaschaltung umfasst, die zum Transformator hinzugefügt ist.

**10.** Transformatorenstation nach einem der Ansprüche 1 bis 9, wobei der Transformator einen Kessel (23) besitzt und auf einer Seitenfläche des Kessels einen ersten Schaltschrank (24) umfasst, in dem sich die Anschlussklemmen (25) an das MS-Netz befinden, wodurch ein Schaltschema mit Gerüst- oder Antennendurchführung ermöglicht wird, und einen zweiten Schaltschrank (26), der eine NS-Verteilungstafel (27) umfasst, welche die Ableitung der Energie aus mehreren NS-Kabeln ermöglicht.

**11.** Transformatorenstation nach Anspruch 10, wobei der Transformator eine Schutzvorrichtung integriert, die drei MS-Sicherungen (28) mit Schlagvorrichtung (29), eine dreiphasige Abschaltvorrichtung (30) und eine Vorrichtung (31) zum Erfassen der Fehlerströme zwischen Phase und Masse des aktiven Teils des Transformators verknüpft.

**12.** Transformatorenstation nach Anspruch 11, wobei die Masse der Drosselspule von der Hauptmasse der Station getrennt und elektrisch mit der Masse des aktiven Teils des Transformators verbunden ist.

**13.** Elektrisches Mittelspannungsnetz, **dadurch gekennzeichnet, dass** es mindestens eine Transformatorenstation nach einem der Ansprüche 1 bis 12 und mindestens eine Transformatorenstation, die kein Mittel zum Ausgleichen des gleichpoligen kapazitiven Stroms umfasst, umfasst.

**FIG.1**

**FIG.2**

**FIG.3**

**FIG.4**

**FIG.5**

**FIG.6**

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0817346 A

- EP 1122848 A